# EUROPEAN PATENT SPECIFICATION

(11) **EP 0 247 612 B1**
(45) Date of publication and mention of the grant of the patent: **04.08.1993**
(21) Application number: 87107754.1
(22) Date of filing: 27.05.1987
(51) Int. Cl.: G01S 13/76, G01S 13/78, G01S 13/82, G07C 9/00

(54) **Microwave data transmission apparatus**
Mikrowellen-Datenübertragungsgerät
Appareil de transmission de données à micro-ondes

(30) Priority: 30.05.1986 JP 126729/86; 30.05.1986 JP 126730/86
(43) Date of publication of application: 02.12.1987
(73) Proprietor: SHARP KABUSHIKI KAISHA, Osaka 545 (JP)
(72) Inventor: Ohta, Tomozo, Ikoma-shi Nara-ken (JP); Nakano, Hiroshi, Tenri-shi Nara-ken (JP); Higashi, Kazutada, Tenri-shi Nara-ken (JP); Yamamoto, Hirohiko, Tenri-shi Nara-ken (JP)
(74) Representative: Selting, Günther, Dipl.-Ing.

(56) References cited:
- AU-B- 558 130
- GB-A- 2 048 600
- US-A- 4 196 418
- PROCEEDINGS OF THE IEEE, vol. 63, no. 8, August 1975, pages 1260-1261, New York, US; A.R. KOELLE et al.: "Short-range radio-telemetry for electronic identification, using modulated RF backscatter"
- 35TH IEEE VEHICULAR TECHNOLOGY CONFERENCE, Boulder, Colorado, 21st - 23rd May 1985, pages 285-291, IEEE, New York, US; D.J. REITZ: "Automatic vehicle identification technology and applications"
- PROCEEDINGS OF THE IEEE 1987 CUSTOM INTEGRATED CIRCUITS CONFERENCE, Portland, Oregon, 4th - 7th May 1987, pages 684-686, IEEE, New York, US; J.G. NOLAN et al.: "A radiation powered single chip EEPROM ID code transceiver"

## Description

The present invention relates to a microwave data transmission apparatus which is adapted to transmit and receive information by microwave.

Conventionally, the construction shown in Fig. 7 is used as a microwave data transmission apparatus for transmitting and receiving information by microwave.

In Fig. 7, an identification tag 2 is adapted to output the fixed information stored therein, through microwave signal waves towards an interrogator 1 when the interrogator 1 asks to an identification tag 2 a question through microwave signal radio waves. The interrogator has therein a signal generator 3 for generating the microwave signals, a transmitting antenna 4 for transmitting the signals coming from the signal generator 3 as waves into the air, a receiving antenna 5 for receiving the waves fed from the identification tag 2, and a demodulator 6 for demodulating the microwaves coming from the receiving antenna 5. Also, the identification tag 2 has a receiving antenna 7 for receiving the waves from the interrogator 1, a demodulator 9 for demodulating the microwaves received by the receiving antenna 7, a signal generator 10 for producing the carrier waves of the microwave band, a code generator 11 for fixedly storing the code information to generate the code information signals in accordance with the outputs of the demodulator 9, a mixer 12 (which may be a modulator) for mixing the code information signals delivered by the code generator 11 with the carrier-wave signals delivered by the signal generator 10, and a transmitting antenna 8 for transmitting the output signals of the mixer 12.

In the conventional microwave data transmission apparatus of the above-described construction, the signals obtained from the signal generator 3 within the interrogator 1 are transmitted towards the identification tag 2 by the transmitting antenna 4. The transmission signals are received by the receiving antenna 7 of the identification tag 2 and continuously demodulated by the demodulator 9. The signal after the demodulation functions as a controlling signal for controlling the code generator 11 and the signal generator 10. The code information signals are fed to the mixer 12 from the code generator 11 by the control of the signals after the demodulation. Also, the carrier waves of the microwave band are fed to the mixer 12 from the signal generator 10. In the mixer 12, the carrier waves of the microwave band are modulated with the code information signal. The modulated signals are transmitted into the air with the waves towards the interrogator 1 by the transmitting antenna 8 of the identification tag 2. In the interrogator 1, the waves from the identification tag 2 are received by the receiving antenna 5, and the fixed information stored in advance in the identification tag 2 is obtained by demodulation in the demodulator 6.

However, for transmitting the carrier waves of the microwave band a signal generator 10 without fail is necessary within the identification tag 2 in the above-described microwave data transmission apparatus. A power-supply apparatus of comparatively large capacity is provided for the driving operation of the signal generator 10. Thus, the construction of the identification tag 2 is rendered complex and large in size. Also, in the conventional apparatus, no consideration is given to change the memory contents of the code information in the code generator 11, thus resulting in an extreme limitation to flexibility and application.

In "PROCEEDINGS OF THE IEEE", vol. 63, no. 8, August 1975, pages 1260-1261, New York, USA; A.R. Koelle et al.: "Short-range radio-telemetry for electronic identification, using modulated RF backscatter", a microwave data transmission system is disclosed, wherein an interrogator transmits a carrier microwave that is received by a tag. Some of the microwave signal received by the tag is rectified to power the tag circuitry. The remaining microwave signal is modulated in the tag by varying the load on a rectifier. Thus, a modulated microwave is sent back from the tag to the interrogator. The interrogator demodulates the modulated microwave frequency so that the modulation signal of the tag is obtained in the interrogator. The code for modulating the microwave is produced by an ID code generator provided within the tag. In this system, it is difficult to change the ID code produced by the code generator. This necessitates a physical access to the tag.

US-A-4 196 418 describes a detection plate for an identification system, having a coding circuit for storing the individual code of the detection plate. The detection plate can respond to an interrogator by modulating the frequency transmitted from the interrogator with the data contained in the coding section. However, it is difficult to change the identification data.

It is an object of the present invention to provide an improved microwave data transmission system wherein the code data stored in the memory of the tag may be readily changed.

This is achieved, according to the invention, with a microwave transmission system according to claim 1.

The invention will be explained in detail with reference to the following description taken in conjunction with preferred embodiments thereof with reference to the accompanying drawings, in which:
Fig. 1 is a block circuit diagram of a microwave data transmission apparatus in accordance with a first embodiment of the present invention;
Fig. 2 is a wave-form diagram related to Fig. 1;
Fig. 3 is an electric circuit diagram of a CPU 27 with a built-in power supply employed in Fig. 1;
Fig. 4(a) to Fig. 4(f) is a wave-form diagram related to Fig. 1;
Fig. 5 is a block circuit diagram of a microwave data transmission apparatus in accordance with a second embodiment of the present invention;
Fig. 6 is a wave-form diagram related to Fig. 5,and;
Fig. 7 is a similar diagram to Fig. 1, but, showing a conventional microwave data transmission apparatus already referred above.

### (Embodiment 1)

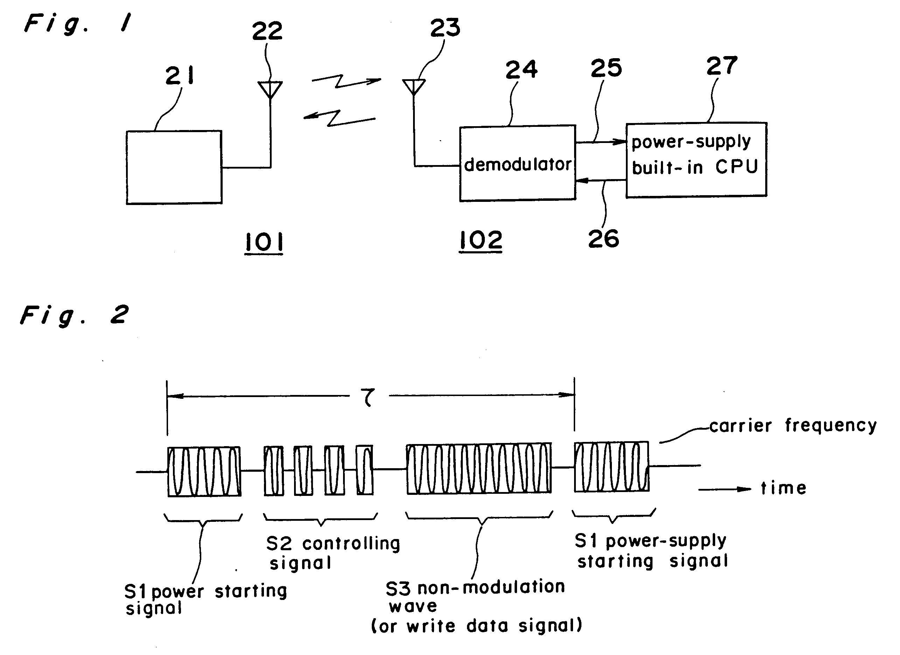

Fig. 1 shows a block circuit diagram in a first embodiment of a microwave data transmission apparatus in accordance with the present invention.

Referring now to the drawings, there is shown in Fig. 1, a microwave data transmission apparatus, which includes a interrogator 101 composed of a transceiver 21 and a transceiving antenna 22, an identification tag 102 including a transceiving antenna, a demodulator and modulator 24, a receiving signal line 25, a transmitting signal line 26, and a CPU 27 with built-in power supply. It is to be noted that the same signal line may be used as receiving signal line 25 and the transmitting signal line 26.

Also, Fig. 2 shows the waveform chart of the signal wave to be transmitted to the identification tag 102 from the interrogator 101. As shown in Fig. 2, the signal wave is composed of a power starting signal Sl, a controlling signal S2, and a non-modulation wave S3 (or storing data or the like) so that the signal wave is repeatedly transmitted with the period τ.

The operation is as follows in the above-described microwave data transmission apparatus.

First, a series of signal waves are transmitted, which are repeated with the period τ shown in Fig. 2 from the transceiving antenna 22 of the interrogator 101. The power starting signal Sl is one for starting the CPU 27 with built-in power supply of the identification tag 102. When the identification tag 102 is mounted on the vehicle, baggage or other movable object, the power supply is not required to be normally kept started. In order to make the identification tag 102 smaller in size, the power consumption should be low. Also, when the interrogator 101 is adapted to be fixedly used in specified positions near the gate of the parking lot, the robot of a production line or the like, the power supply of the identification tag 102 is sufficient if it allows the starting operation only in the surveillance region over which the radiating waves of the interrogator 101 reach. The power consumption is controlled to be minimum outside this region whereby energy may be saved.

The controlling signal S2 following the power starting signal is a signal for conveying to the CPU 27 with built-in power supply an information whether the instruction of the interrogator 101 concerns the reading-out of the data stored within the memory of the CPU 27 with built-in power supply or concerns writing of data into the memory. If the controlling signal S2 is the read controlling signal for reading-out data from the memory, a non-modulated wave of a constant length is transmitted, following the controlling signal S2. If the controlling signal S2 is the write controlling signal for writing data into the memory, the writing data are transmitted, following the controlling signal S2. If the CPU is designed to perform the reading operation only after the power starting signal Sl, the controlling signal for reading may be omitted.

Fig. 2 shows how a series of signals is produced through the amplification modulation of the carrier wave of the frequency f. Frequency modulation or phase modulation may be used as the method of modulation of a carrier wave having the frequency f.

A series of signals, shown in Fig. 2, transmitted from the interrogator 101 are received by the transceiving antenna 23 of the identification tag 102, and each of the signals is demodulated by the demodulator and modulator 24 so that it is transmitted to the CPU 27 with built-in power supply through the receiving signal line 25. The CPU 27 with built-in power supply detects the power starting signal Sl of this demodulated signal to start the power supply, and sequentially outputs the data stored within the memory if the controlling signal S2 continuously fed is a read controlling signal, to deliver the demodulator and modulator 24 the data through the transmitting signal line 26. The non-modulated waves received by the transceiving antenna 23 following to the controlling signal S2 are modulated with the reading data which are read-out from the memory of the CPU 27 with built-in power supply, and are radiated again from the transceiving antenna 23. The waves which are modulated and reradiated by the demodulator and modulator 24 are received by the transceiving antenna 22 of the interrogator 101 and are demodulated by the transceiver 21. On the other hand, when the controlling signal S2 following the power starting signal Sl is a writing controlling signal, the writing data signals to be sent following to the controlling signal S2 are fed into the CPU 27 with built-in power supply through the receiving signal line 25, and are written into a region of the memory for the storing operation.

The data transmitting operation of the optional information writing or reading is performed by a series of operations with respect to the identification tag from the interrogator 101. The identification tag 102 is adapted to start the power supply only when it is in the surveillance region of the interrogator 101, and to automatically turn off the power supply, except for the case to provide the condition "start waiting" so as to save the power consumption.

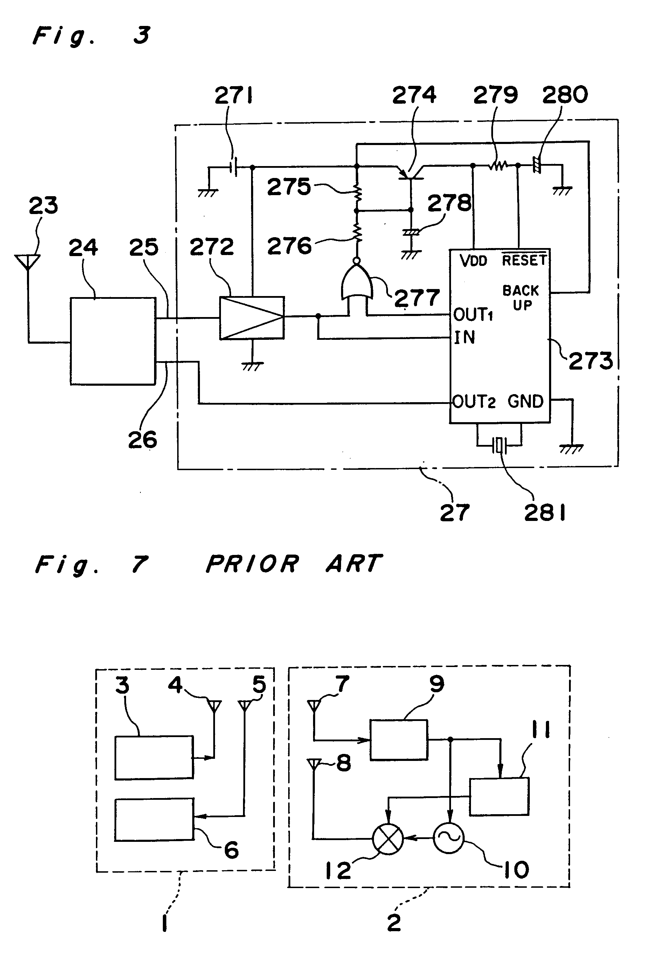

One example of the further concrete circuit construction of the CPU 27 with built-in power supply is shown in Fig. 3, which includes a power supply 271 such as a battery, storage battery or the like, an amplifier 272 composed of a C-MOS operation amplifier or the like, a microprocessor 273 for C-MOS technique, a transistor 274, resistors 275, 276, 279, a NOR gate 277 for C-MOS technique, a capacitor 278, and a vibrator 281 of ceramic, crystal or the like.

In Fig. 3, the power is always fed to the supply terminals of the amplifier 272, the NOR gate 277, and the microprocessor 273. The supply terminal of the microprocessor 273 is a terminal disposed to retain the memory data stored in the internal RAM. The power consumption by these elements is as extremely small as about 30 µW at the most, with 3 V in power voltage. The amplifier 272 amplifies up to the voltage level necessary to drive the C-MOS NOR gate 277. A LOW level (earth potential) is outputted at the non-signal time from the output terminal. A comparator of the C-MOS, which is not shown, is disposed on the output stage of the amplifier 272.

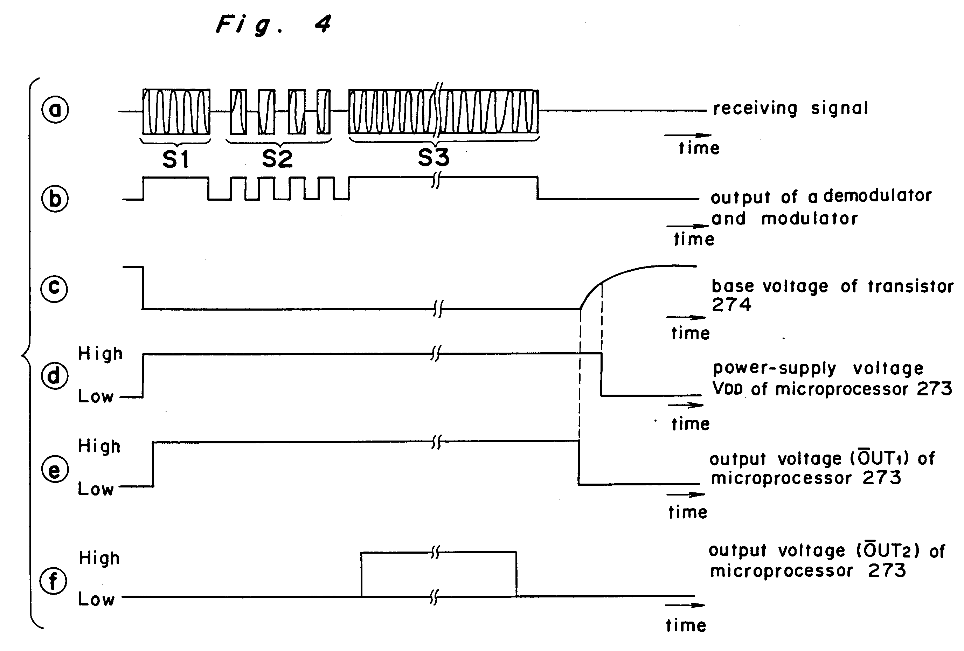

The diagram a through f in Fig. 4 show the voltage waveforms of each portion of the circuit of the CPU 27 with built-in power supply of Fig. 3. The operation of the CPU 27 with built-in power supply will be described in further detail with respect to the voltage waveform of Fig. 4.

The microwave signal (Fig. 4 a ) from the interrogator 101 received by the transceiving antenna 23 is demodulated (Fig. 4 b) by the demodulator and modulator 4, and is guided into the amplifier 272. The transistor 274 is in the turn-off state as two input terminals of the NOR gate 277 are both low in low level (earth potential) at the non-signal time. When the microwave signal is received, the output of the amplifier 272 becomes high in level (power-supply potential) by such a power starting signal as shown in Fig. 2, and the output of the NOR gate 277 becomes low in level so that the base voltage of the transistor 274 is reduced and the transistor goes into the turn-on state (Fig. 4 c ). As a result, the power voltage is applied upon the V_{DD} terminal (Fig. 4 d ) through the transistor 274 to start generating the clock signals with the oscillation frequency of the vibrator 281 in the microprocessor 273 and the signals changing from the low level to the high level are fed, while the capacitor 280 is being charged, to the resetting terminal to reset the microprocessor 273. The microprocessor 273 starts the operation in accordance with the built-in program from this time point to, first, set the output terminal OUT1 to the high level. As the output terminal of the NOR gate 277 still maintains the low level even if the output of the other input terminal of the NOR gate 277, i.e., the output of the amplifier 272 becomes low in level, the power voltage is fed to the V_{DD} terminal, so that the microprocessor 273 continuously operates. Then, the microprocessor 273 watches the outputs of the amplifier 272 introduced into the input terminal IN in accordance with the built-in program. When the controlling signal S2 is judged to be a read controlling signal, the contents stored within the microprocessor are sequentially read out at the output terminal OUT2 of the microprocessor 273 as shown in Fig. 4 f and are outputted to the demodulator and modulator 4. Also, when the controlling signal S2 is judged to be a write controlling signal, the write data S3 following the controlling signal is sequentially fed to the input terminal IN and is stored into the memory of the CPU. The data stored in this memory are continuously retained by the power voltage to be applied upon the back-up terminal even after the power supply of the microprocessor 273 has been turned off by the turn-off state of transistor 274.

After the above-described series of operation are over, the microprocessor 273 turns the output terminal OUT1 into the low level (Fig. 4 e) in accordance with the built-in program. Thereafter, an idling condition takes place with doing nothing, two input terminals of the NOR gate 277 become both low in level, and the output of the NOR gate 277 becomes high in level to turn the transistor into the turn-off state. Accordingly, the microprocessor 273 stops its operation.

The concrete example of a automatic identification system for exchanging the data by the microwave data transmitting apparatus which uses the above-described interrogator and the identification tag will be described hereinafter. This type of apparatus may be used in the production control within a factory, a warehouse control, a gate control for a parking lot, a control for entering or leaving a room, or the like. Concretely, in the production control within a factory, a small-size identification tag is mounted on each part flowing along the production line, and an interrogator for reading the memory data of the identification tag is disposed near the line. The information on each part which comes closer to the interrogator is read through the identification tag to control the flowing on the line of the parts in accordance with the information. The production control of the parts may be precisely performed in this manner.

According to the first embodiment, the various signals may be transmitted and received in time series by the use of one type of the working signal frequency only, so that the automatic identification system having many functions may be realized, thus allowing the wider application as well as the extremely practical system may be realized.

### (Embodiment 2)

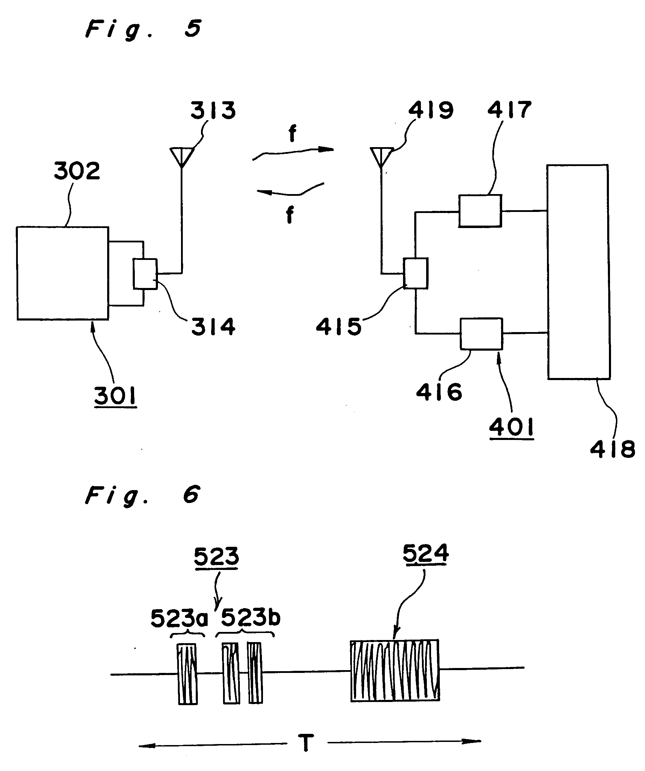

Fig. 5 shows a block diagram of a second embodiment of a microwave data transmitting apparatus in accordance with the present invention.

In Fig. 5, an interrogator 301 is provided with a transceiver 302 having a transmitting circuit for transmitting the waveform microwave signal shown in Fig. 6, a polarized wave separating and composing member 314 for transmitting by the mutually different first and second polarized waves of the same frequency both the controlling signal 523 and the non-modulation carrier 524 shown in Fig. 6. The following pairs of mutually different polarized waves may be used: the combination between a right-hand circularly polarized wave and a left-hand circularly polarized wave, or the combination between a circularly polarized wave and a linearly polarized wave, and the combination between a linearly polarized wave of 0° direction and a linearly polarized wave of 90° direction. A transceiving antenna 313 for transmitting the microwave signal into the air (or receiving it from the air) is connected with the interrogator 301.

The identification tag 401 has therein a polarization separating member 415 for separating, in accordance with the polarized wave, the microwave signals generated from the interrogator 301, a demodulator 416 for demodulating the controlling signal 523, a modulator 417 for modulating the non-modulation carrier 524 to be fed continuously in time series with the controlling signal 523, and a signal processing member 418 composed of a circuit of low power consumption of C-MOS technique or the like for carrying out each type of signal processing operation. Also, a transceiving antenna 419 for transmitting the microwave signal into the air (or receiving it from the air) is connected with the identification tag 401.

The operation of the above-described microwave data transmission apparatus will be described hereinafter in detail.

The microwave non-modulation wave is modulated by the modulating signal as shown in Fig. 6 from the interrogator 301 and is transmitted as the radio wave through the transceiving antenna 313. The modulation signal shown in Fig. 6 has a controlling modulation signal 523 of a first polarization direction, for example, the right-hand circularly polarized wave, and the non-modulation wave 524 of the second polarized wave direction, for example, the left and circularly polarized wave, and is a signal that repeatedly appears with a constant period T. The radio wave transmitted by the transceiving antenna 313 is caught by the transceiving antenna 419 on the side of the identification tag 401 when the distance between the interrogator 301 and the identification tag 401 is a predetermined value or lower, and the receiving electric-field level has a certain value or higher. The received signal is separated by the polarized-wave separating and composing member 415. The controlling modulation signal 523 is demodulated by the demodulator 416 and thereafter is fed into the signal processing member 418. The signal processing member 418 remains in its waiting condition as long as no signal from the interrogator 301 is received. This waiting condition means an inoperative condition where the power consumption is on the minimum limit necessary to retain the information of the RAM inside the signal processing member 418, and power feed is only performed to a few of the circuits.

When the data information to be retained in the identification tag 401 is required to be read under such a condition as described hereinabove, the signal processing member 418 changes to the operating condition if the signal processing member 418 receives through the demodulator 416 the signal 523a for power start from the interrogator 301. The processing is recognized to be a reading operation of the data information by the signal detection of the next read instructing signal 23b. The CPU within the signal processor 418 feeds to the modulator 417 the data information stored in the RAM upon recognition of the following non-modulation carrier 524. The modulator 417 modulates the non-modulation carrier 524 received through the polarized-wave separating and composing member 415 with the data information. The modulated waves are radiated towards the interrogator 301 from the transceiving antenna 419 so that they are received by the polarized-wave separating and composing member 415. The modulated waves are radiated towards the interrogator 301 from the transceiving antenna 419 so that they are received in the interrogator 301 by the transceiving antenna 313. The received waves are detected in the transceiver 302 to extract the data information stored within the signal processing member 418.

In order to change the data information retained in the identification tag 401, the interrogator 301 transmits as radio waves the controlling modulating signals 523 composed of the directionally polarized microwave signals described above through the transceiving antenna 313, thereafter transmits the writing data signals 524', composed of the same first direction polarized microwave signals, as the radio waves from the transceiving antenna 313. When the writing data signals 524' are transmitted as the radio waves from the transceiver antenna 313, the antenna 419 of the identification tag 401 receives the radio waves, and the demodulator 416 demodulates the received signals through the polarization separating and composing member 415 to guide the demodulation signals into the signal processing member 418. At this time, the signal processing member 418 changes to the operating condition upon reception of the power starting signal 523a of the preceding modulation signal 523 for control use, and knows that it is adapted to perform the data information changing process by the signal detection of the write instructing signal 523b so as to re-write the contents of the memory data retained in the internal RAM in accordance with the demodulated signal. Although the described example the read instructing signals from the interrogator 301 is used for performing the reading operation, the read command signal may be omitted if the CPU is designed to be read only through the signal 523a for power starting use.

The above-described microwave data transmission apparatus may be applied for the production control within a factory, the warehouse control, the gate control of parking lots, and the control for entering and leaving the room by a person having an identification tag. For example, for use in the production control within a factory, on each part, an interrogator is mounted, which has the individual data inputted previously in the memory, the data including the code numerals of the production line, the working procedure, the carrying routes, etc. The interrogators are disposed in the major point locations on the production line. The interrogator transmits the microwaves with respect to the identification tag disposed on each part flowing on the production line to read the internal data as described hereinabove to output the control signal for controlling the flow of the line. As the microwaves penetrate plastic and lumber, the identification tag is not particularly required to be disposed on the surface of each part.

According to the second embodiment, in the highly functional microwave data transmission system the identification tag may be made smaller in shape and lighter in weight because of low power consumption.

## Claims

1. A microwave data transmission system having
an interrogator (101) provided with a transmission means (21) for transmitting a carrier microwave,
and an identification tag (102) provided with transmitting and memory means (24, -27) for detecting the carrier microwave sent from said interrogator (101) and for modulating said carrier microwave with data contained in said memory to transmit modulated microwave signals to said interrogator (101),
**characterized in that**
said carrier microwave transmitted by the interrogator has a controlling signal part (S2) modulatable by the interrogator to define a read command or a write command, and an information signal part (S3) which is unmodulated when the controlling signal part (S2) defines a read command, and which is modulated with data when the controlling signal part (S2) defines a write command,
and the identification tag (102) modulates the carrier microwave in the information signal part (S3) with the data contained in its memory when the controlling signal defines a read command, and stores into said memory the data carried by the carrier microwave in the information signal part (S3) when the controlling signal part (S2) defines a write command.

2. The microwave data transmission system of claim 1, wherein the carrier microwaves in the controlling signal part (523) and in the information signal part (524) are of the same frequency but of different polarizations, and the identification tag (401) comprises a polarization separating member (415) for separating said parts.

3. The microwave data transmission system of claim 2, wherein the carrier microwaves in the controlling signal part (S2) and in the information signal part (S3) are both circularly polarized and have different turning directions.

## Patentansprüche

1. Mikrowellen-Datenübertragungssystem mit
- einer Abfragevorrichtung (101), die mit einer Sendeeinrichtung (21) zum Senden einer Trägermikrowelle versehen ist,
- und einer Identifizierungsmarke (102), die versehen ist mit einer Sende- und Speichereinrichtung (24 - 27) zum Erkennen der von der Abfragevorrichtung (101) gesendeten Trägermikrowelle und zum Modulieren der Trägermikrowelle mit in der Speichereinrichtung enthaltenen Daten, um modulierte Mikrowellensignale an die Abfragevorrichtung (101) zu senden,
dadurch gekennzeichnet, daß
die von der Abfragevorrichtung gesendete Trägermikrowelle einen Steuersignalteil (S2), der von der Abfragevorrichtung zum Definieren eines Lese- oder eines Schreibbefehls modulierbar ist, und einen Informationssignalteil (S3) aufweist, der unmoduliert ist, wenn der Steuersignalteil (S2) einen Lesebefehl definiert, und der mit Daten moduliert ist, wenn der Steuersignalteil (S2) einen Schreibbefehl definiert,
und die Identifizierungsmarke (102) die Trägermikrowelle in dem Informationssignalteil (S3) mit den in ihrem Speicher enthaltenen Daten moduliert, wenn das Steuersignal einen Lesebefehl definiert, und die von dem Träger im Informationssignalteil (S3) enthaltenen Daten in den Speicher speichert, wenn der Steuersignalteil (S2) einen Schreibbefehl definiert.

2. Mikrowellen-Datenübertragungssystem nach Anspruch 1, bei dem die Trägermikrowellen im Steuersignalteil (523) und im Informationssignalteil (524) die selbe Frequenz, jedoch unterschiedliche Polarisierungen aufweisen, und die Identifizierungsmarke (401) ein Polarisierungstrennteil (415) zum Trennen der Teile aufweist.

3. Mikrowellen-Datenübertragungssystem nach Anspruch 2, bei dem die Trägermikrowellen im Steuersignalteil (S2) und im Informationssignalteil (S3) beide zirkular polarisiert sind und unterschiedliche Drehrichtungen haben.

## Revendications

1. Système de transmission de données à micro-ondes ayant
un interrogateur (101) muni d'un moyen d'émission (21) pour émettre une micro-onde porteuse,
et un bloc d'identification (102) muni de moyens émetteur et de mémoire (24, 27) pour détecter la micro-onde porteuse envoyée à partir dudit interrogateur (101) et pour moduler ladite micro-onde porteuse avec des données contenues dans ladite mémoire pour émettre des signaux micro-ondes modulés vers ledit interrogateur (101),
caractérisé en ce que
ladite micro-onde porteuse émise par l'interrogateur a une partie signal de commande (S2) qui peut être modulée par l'interrogateur pour définir une instruction de lecture ou une instruction d'écriture, et une partie signal d'information (S3) qui est non modulée lorsque la partie signal de commande (S2) définit une instruction de lecture, et qui est modulée avec des données lorsque la partie signal de commande (S2) définit une instruction d'écriture,
et en ce que le bloc d'identification (102) module la micro-onde porteuse dans la partie signal d'information (S3) avec les données contenues dans sa mémoire lorsque le signal de commande définit une instruction de lecture, et mémorise dans ladite mémoire les données portées par la micro-onde porteuse dans la partie signal d'information (S3)lorsque la partie signal de commande (S2) définit une instruction d'écriture.

2. Système de transmission de données à micro-ondes selon la revendication 1, dans lequel les micro-ondes porteuses dans la partie signal de commande (523) et dans la partie signal d'information (524) ont la même fréquence mais des polarisations différentes, et dans lequel le bloc d'identification (401) comprend un élément de séparation de polarisation (415) pour séparer lesdites parties.

3. Système de transmission de données à micro-ondes selon la revendication 2, dans lequel les micro-ondes porteuses dans la partie signal de commande (S2) et dans la partie signal d'information (S3) sont toutes deux à polarisation circulaire et ont des sens de rotation différents.
